# NEW EUROPEAN PATENT SPECIFICATION

(11) **EP 0 562 519 B2**
(45) Date of publication and mention of the opposition decision: **22.05.2002**
(45) Mention of the grant of the patent: 21.08.1996
(21) Application number: 93104678.3
(22) Date of filing: 22.03.1993
(51) Int. Cl.: B60J 7/057

(54) **Operating device for a sunroof**
Betätigungsvorrichtung für ein Sonnendach
Dispositif de commande pour un toit pare-soleil

(30) Priority: 26.03.1992 IT BG920012
(43) Date of publication of application: 29.09.1993
(73) Proprietor: ZANI S.R.L, I-25066 Lumezzane (Brescia) (IT)
(72) Inventor: Zani, Bruno, I-25066 Lumezzane (IT); Zani, Duilio, I-25066 Lumezzane (IT)
(74) Representative: Lusuardi, Werther Giovanni, Dr.

(56) References cited:
- DE-A- 3 930 756
- US-A- 4 596 419
- US-A- 5 066 068

## Description

The present invention relates to a sunroofs operating device for motor vehicles and the like substantially consisting of lateral arms integral with sliding block coupled to circular toothed segment levers in which are present longitudinal sliding slots for lateral slides of front guides.

On said block of said front guides are arranged two moving fulcrums of shaped levers on which are present quick connection and disconnection means for said sunroofs.

Said shaped levers comprise at the front ends a third moving fulcrum consisting of transverse pins engaged in the front ends of the longitudinal slots of said arms.

With the front guides are combined locking and unlocking serrations whose operation is a function of the longitudinal sliding of the sliding block arms and of the engagement of corresponding pins in the above slots.

With the quick connection and disconnection means of said shaped levers are engageable the rigid supports of interchangeable sunroofs whether transparent or opaque and insulated or not.

In EP-A-0480,166 in the name of the same applicant, there is described, illustrated and claimed an operating device according to the preamble of claim 1 for the opening and dosing of motor vehicle sunroofs which rigid supports constrained to sunroofs engage with special coupling means in an equal number of couplings placed on sliding levers. Each of said levers comprises an end for sliding on guides and a pair of moving fulcrums which engage with the ends of pulling bodies and transverse pins of toothed circular segment levers. Said toothed segments engage with racks which are integral with trucks sliding by pulling on which are pivoted said segments with the ability to move longitudinally along slots.

The pulling bodies and the slide block are connected together by sliding plates whose function is to guide longitudinally and in rotation the movement of said toothed circular segments during lifting and/or lowering and translation in opening and/or closing of the sunroofs.

The pulling movement of the devices is preferably obtained by cables or the like constrained to said slide block with manual or powered operation.

The object of the present invention is to to reduce the front spaces occupied by the devices and simplify the various components thereof without prejudice for the overall construction concept for which the functional validity is confirmed.

According to the present invention the above object is achieved by the features of claim 1.

Particular embodiments of the invention are set forth in dependent claims 2 to 7.

The invention is described in greater detail below in accordance with a preferred nonlimiting embodiment with reference to the annexed drawings wherein:

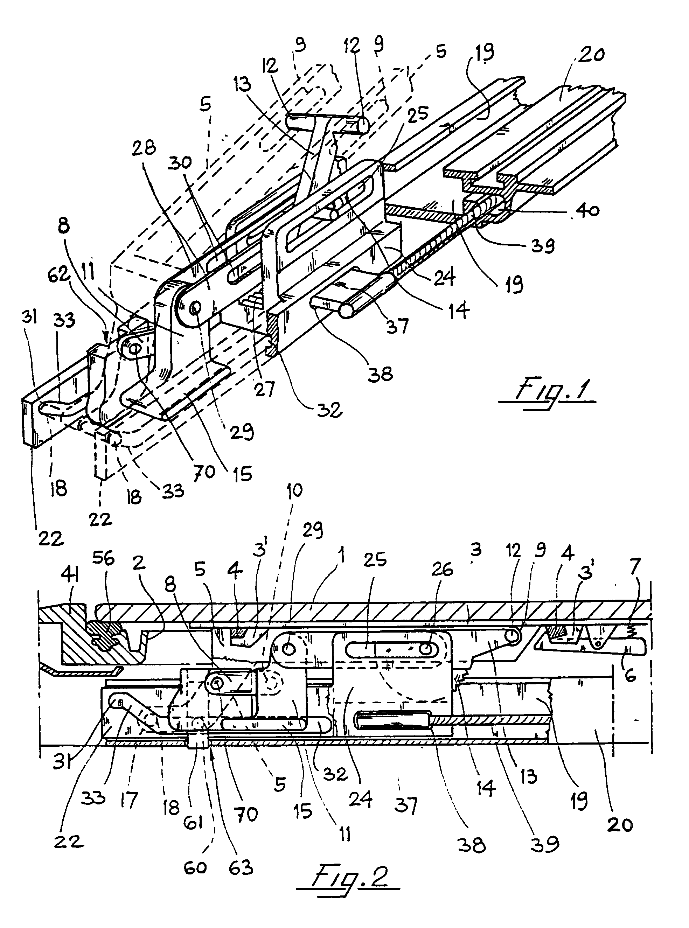

FIG. 1 shows an overall perspective view of a device,
FIG. 2 shows a partial cross sectioned side view of a device in the closed position,

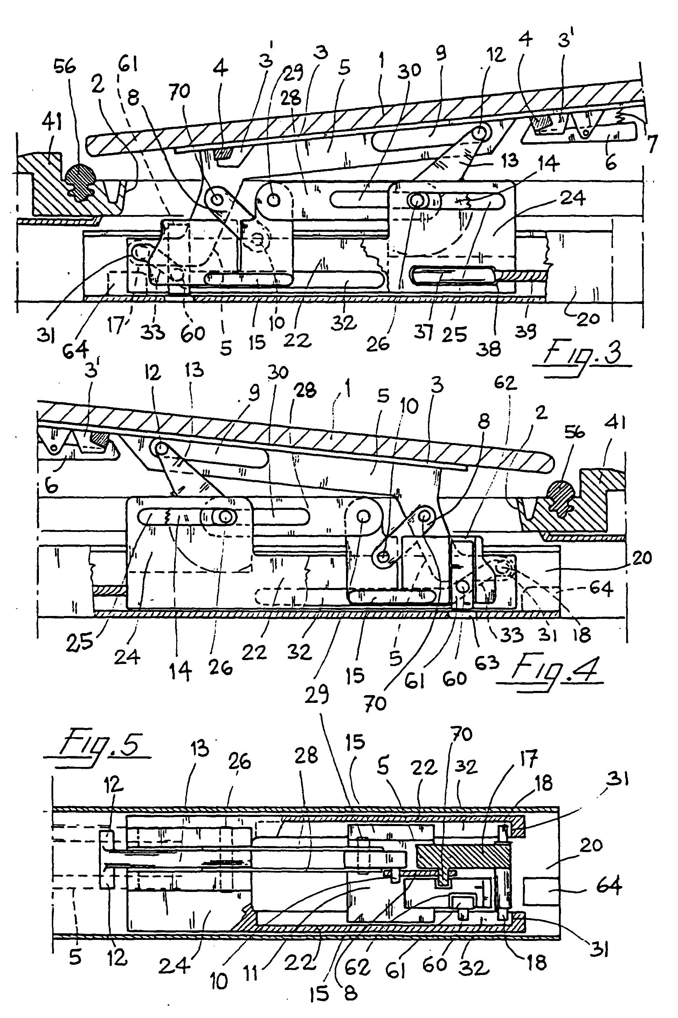

FIG. 3 shows a partially cross sectioned side view of the device of FIG. 2 in the open position,
FIG. 4 shows the device of FIG. 3 seen from the opposite side, and
FIG. 5 shows said device in a schematic plan view.

The figures illustrate improvements in operating devices for motor vehicle sunroofs and the like in which a glass (1) or any type of interchangeable sliding cover whether insulated or not is supported by two rigid supports (3) comprising coupling serrations (3') which engage with couplings (4) integral with shaped sliding levers (5). On each lever (5) one of said couplings (4) is coupled with a locking lever (6) held in position by an elastic body (7) such as for example a spring or the like. By releasing the lever (6) from the respective coupling (4) it is possible to rapidly remove the cover (1) and replace it with any other type of cover whether opaque or transparent.

With the above means there is provided quick and sure constraint between the supports (3) and corresponding shaped levers (5) in which are provided slots (9) designed to contain with freedom to slide the pins (12) present on the ends of the levers (13) with toothed circular segment (14).

The shaped levers (5) in their front part have a deflection inclined downward to then bend forward at the front end (17) and terminate with transverse pins (18). Said front ends (17) of the shaped levers (5) are substantially flush with the front edge (2) which delimits the opening of the frame (41) of the glass or cover (1).

Said delimitation simplifies the overall structure of the sunroofs reduces its dimensions and facilitates assembly operations.

The transverse pins (18) of the ends (17) of said levers (5) are engaged in the front parts (31) of longitudinal slots (32) with upward inclined sections (33) which are present on two parallel opposing arms (22) which are integral with sides of each slide block (24).

The arms (22) run in lateral guides (19) of a section bar (20) each of which constitutes a lateral guide for the cover (1).

The slide blocks (24) comprise two lateral walls having an equal number of parallel and opposed slots (25) in which are engaged in a sliding manner the opposite ends of pins (26) constituting the fulcrum of said levers (13) with toothed circular segment (14).

Said segments engage with racks (27) integral with said slide block and arranged in their centre between said side walls.

Each slide block (24) couples with a front guide (11) by means of parallel levers (28) which on one side are pivoted on pins (29) projecting from said guide and on the other side have slots (30) in which are engaged in a sliding manner said fulcrum pins (26) of the corresponding lever (13). The parallel levers (28) are aligned laterally with the lever (13) with toothed circular segment (14) of each truck (24) and their function is that of longitudinal guide of said levers.

The guides (11) are equipped with lateral slides (15) which engage in a sliding manner in the longitudinal slots (32).

In one of said slots is engaged also a pin (60) which is integral with a serration (61) which can run in a vertical groove (62) present on each front guide (11) and which can engage in a slot (63) present on the bottom of the section bars (20).

Each front guide (11) comprises also an upper projecting pin (10) on which is pivoted the end of a plate (8) which at its other end engages in a pin (70) present on each lever (5) near the inclined deflection.

With the sunroofs closed (1) each serration (61) is engaged in the slot (63) with a corresponding pin (60) aligned with the horizontal zone of the corresponding slot (32) and this means that the slide blocks (24) are positioned fully forward together with their opposing arms (22). In this position the levers (13) are all lowered, the slide blocks (24) are facing the front guides (11) which in turn strike against the stops (64) and are constrained to the guides (20) through the serrations (61). The levers (5) are drawn downward by the transverse pins (18) engaged in the lower part of the slots (32) and by the pins (12) fully lowered and engaged in the slots (9) of the shaped levers (5).

In the opening phase the slide blocks (24) are drawn rearward by means of serrations 37 which engage in the side slots (38) and are constrained to flexible cables (39) which run along the passages (40) present in the section bars (20). Traction on said cables is exerted by manual or powered actuators of known type. During pulling of the trucks the toothed segments (14) rotate on the racks (27), the levers (13) rise and the pins (12) lift the canopy (1), running in the slots (9) of the shaped levers (5). With the slide blocks (24) the respective arms (22) run backward while the front guides (11) remain stopped at their position because blocked by the serrations (61) engaged in the slots (63).

Upon lifting of the shaped levers (5) derived from rotation of the levers (13) the transverse pins (18) are forced to rise pushed by the backward movement of the inclined sections (33) of the slots (32) while the plates (8) are forced to rotate once around the pins (10) of the respective guides (11) stopped in a position of engagement of said serrations (61).

Said rotation imposed by the fixed position of the pin (10) on the guides (11) and by engagement of the plates (8) on the pins (70) causes backward sliding of the lever (5).

Said vertical and backward translations allow raising of the front part of the sunroofs (1) and running it slightly backward during its rear rising caused by total rotation of the lever (13) without causing any deformation or compression of the gasket (56). While the pins (12) reach their position of greatest elevation the slots (32) have moved backward sufficiently to convey the pins (60) within the upward inclined sections (33).

Running causes the pins to be raised by rubbing against said inclined sections and the serrations (61) are extracted from their respective slots (63).

Upon total disengagement even the front guides (11) can be pulled backward and with them begins full translation of the sunroofs which is raised and inclined upward in its rear part. In the pulling the transverse pins (18) engage in the front end parts (31) of the slots (32).

In the dosing phase, at the end of travel the front guides (11) strike and stop against the respective stops (64) while the slide blocks (24) with associated lateral arms (22) continue their forward running so that the pins (60) are pushed downward by the inclined sections (33) of the slots (32) and the serrations (61) engage in the slots (63). In due course the parallel levers (28) dose causing rotation of the lever (13) with circular segment (14). The pins (12) lower to recall in dosing the sunroofs (1) through sliding in the slots (9) of the shaped levers (5) which in rotating disengage the transverse pins (18) from the front parts (31) of the slots (32) and, in relation to the running of the arms (22), force rubbing thereon in the inclined sections (33) of said slots until they engage them in the straight lower sections. The movement is aided by rotation of the plate (8) around the pins (10) of the guides (11) in combination with the constraint with the pins (70) of the levers (5).

At the end the sunroofs (1) is fully dosed in adherence with the peripheral gasket (56) and held pressed downward for a perfect seal.

## Claims

1. An operating device for sunroofs (1) for motor vehicles and the like comprising:
- a section bar (20) having lateral guides (19);
- a slide block (24) sliding in said lateral guides (19) of said section bar(20) and provided with two lateral walls having parallel and opposed slots (25) and with rotating means (14) engaged with racks (27);
- shaped levers (5) sliding in said lateral guides (19), supporting the sunroof (1) and each provided with a slot (9);
- means (37,38,39) for the horizontal sliding of the slide block (24);
- means for transforming the horizontal sliding of the slide block (24) into a translation movement of the shaped levers (5);
- means for transforming the horizontal sliding of the slide block (24) into a raising and lowering movements of the sliding shaped levers (5) during the phases of opening and, respectively, of closing of the sunroof (1); said means comprising: a lever (13) provided, at one end, with said rotating means (14) engaged with said racks (27) of the slide block (24), with end pins (12) sliding in said slots (9) of the sliding shaped levers (5), at the opposite end, and with fulcrum pins (26) sliding in said slots (25) of the slide block (24);
- a front guide (11) sliding in said lateral guides (19) of the section bar (20) and coupled to the slide block (24) by levers (28) each having a slot (30) wherein each fulcrum pin (26) slides, and
- blocking means of the front guide (11) during the translation movement of the shaped levers (5); said operating device being **characterized in that**:
- the slide block (24) is provided with two parallel opposing arms (22) sliding in the lateral guides (19) of the section bar (20), each arm (22) having a longitudinal slot (32) with an upward inclined section (33) and a front part (31);
- each shaped lever (5) has a front part downward inclined, a front end (17) forward bend and a transverse pin (18) at the front end (17), each transverse pin (18) engaging in the inclined section (33) and in the front part (31) of each longitudinal slot (32);
- the front guide (11) is provided with lateral slides (15), each sliding in the horizontal part of the longitudinal slot (32) of each arm (22), and with vertical groove (62); said front guide (11) being pivotely coupled to the front part downward inclined of each shaped lever (5) by a plate (8);
- the blocking means of the front guide (11) comprises a pin (60) integral with a stopping serration (61) sliding in said vertical groove (62) of the front guide (11) and engageable within a slot (63) of said section bar (20) in the closing condition of the sunroof;
said horizontal movement of the slide block (24) causing:
- a forward and reverse sliding of the transverse pin (18) in the inclined section (33) of the slot (32) by achieving a sealing adherence of the sunroof (1) to a peripheral gasket (56), in the closed position, and a moving away of the sunroof (1) from the peripheral gasket (56) during the opening phase;
- a rotation of the lever (13) to cause the raising and lowering of the shaped levers (5) pivoting about the transverse pin (18) and about the plate (8), and
- a forward and reverse sliding of the pin (60) in the horizontal part and in the inclined section (33) of the slot (32) so that its serration (61) is engaged in or extracted from its respective slot (63).

2. The operating device according to claim 1, wherein the means for the horizontal sliding of the slide block (24) comprise serrations (37) engaged in side slots (38) of the arms (22) and constrained to a flexible cable (39) sliding along passages (40) of the section bars (20); the traction on said cables being carried out by actuators.

3. The operating device according to claim 1 or 2, wherein the transverse pins (18) of the front ends (17) of said shaped levers (5) enter into engagement with the front horizontal zones of said slots (32) when the sunroofs is closed (1) and with the inclined zones (33) with final positioning in the front zones (31) with the sunroofs open.

4. The operating device according to anyone of the preceding claims, wherein the front ends (17) of the shaped levers (5) for support and constraint of the sunroofs (1) in closed condition are substantially aligned with the front edge (2) delimiting the opening of the frame (41) of the sunroofs (1).

5. The operating device according to anyone of the preceding claims, wherein the shaped levers (5) comprise couplings (4) which engage with coupling serrations (3') provided on rigid supports (3) supporting the covering element (1).

6. The operating device according to claim 5, wherein the couplings (4) is provided with a locking lever (6) held in position by an elastic element (7).

7. The operating device according to anyone of the preceding claims, wherein stops (64) are provided to stop the travel of the front guides (11).

## Patentansprüche

1. Betätigungsvorrichtung für Sonnendächer für Kraftfahrzeuge und dergleichen, mit
einem Profilstab (20), welcher seitliche Führungen (19) aufweist,
einem Gleitblock (24), welcher in den seitlichen Führungen (19) des Profilstabes (20) gleitbar ist und mit zwei seitlichen Wänden, die parallele und gegenüberliegende Schlitze (25) aufweisen, und mit Rotationsmitteln (14), welche mit einer Zahnstange (27) im Eingriff stehen, versehen ist,
geformten, in den seitlichen Führungen (19) gleitenden, das Sonnendach (1) abstützenden und je mit einem Schlitz (9) versehenen Hebeln (5),
einer Einrichtung (37, 38, 39) für das horizontale Gleiten des Gleitblockes (24),
einer Einrichtung zum Umwandeln des horizontalen Gleitens des Gleitblockes in eine Translationsbewegung der geformten Hebel (5),
einer Einrichtung zum Umwandeln des horizontalen Gleitens des Gleitblockes (24) in Anhebund Absenkbewegungen der gleitenden geformten Hebel (5) wahrend der Öffnungs- bzw. der Schließphasen des Sonnendaches (1), wobei diese Einrichtung einen Hebel (13) umfaßt, der an einem Ende mit einer die mit der Zahnstange (27) im Eingriff stehenden Rotationsmittel (14) des Gleitblockes (24) ergreifenden Einrichtung, an dem gegenüberliegenden Ende mit in den Schlitzen (9) der gleitenden geformten Hebel (5) gleitenden Stiften (12) und mit Hebelstiften (26) versehen ist, die in den Schlitzen (25) des Gleitblockes (24) gleiten,
einer vorderen Führung (11), welche in den seitlichen Führungen (19) des Profilstabes (20) gleiten und mit dem Gleitblock (24) über Hebel (28) gekoppelt ist, die je einen Schlitz (30) aufweisen, in welchem jeder Hebelstift (26) gleitet und mit
einer Blockiereinrichtung der vorderen Führung (11) während der Translationsbewegung der geformten Hebel (5),
**dadurch gekennzeichnet, daß**
der Gleitblock (24) mit zwei parallelen gegenüberliegenden Armen (22) versehen ist, die in den seitlichen Führungen (19) des Profilstabes (20) gleiten, wobei jeder Arm (22) einen Längsschlitz (32) mit einem aufwärts geneigten Abschnitt (33) und einem Frontteil (31) aufweist,
jeder geformte Hebel (5) ein abwärts geneigtes Frontteil, ein vorderes vorwärts gebogenes Ende (17) und einen Querstift (18) an dem vorderen Ende (17) aufweist, wobei jeder Querstift (18) in den geneigten Abschnitt (33) und in das Frontteil (31) eines jeden Längsschlitzes (32) eingreift;
die vordere Führung (11) mit seitlichen Gleitstücken (15), die je in dem horizontalen Teil des Längsschlitzes (32) eines jeden Armes (22) gleiten, und mit einer vertikalen Ausnehmung (62) versehen ist, wobei die vordere Führung (11) mittels einer Platte (8) mit dem abwärts geneigten Frontteil eines jeden Hebels (5) schwenkbar gekoppelt ist;
die Blockiereinrichtung der vorderen Führung (11) einen Stift (60) umfaßt, der einstückig mit einer Sperrverzahnung (61) ist, welche in der vertikalen Ausnehmung (62) der vorderen Führung (11) gleitet und im geschlossenen Zustand des Sonnendaches in einen Schlitz (63) des Profilstabes (20) eingreifen kann;
wobei die horizontale Bewegung des Gleitblockes (24) verursacht:
ein vorwärts und umgekehrt gerichtetes Gleiten des Querstiftes (18) in dem geneigten Abschnitt (33) des Schlitzes (32) unter Erzielen eines abdichtenden Haftens des Sonnendaches (1) an einer Randdichtung (56) im geschlossenen Zustand und einer Fortbewegung des Sonnendaches (1) von der Randdichtung (56) während des Öffnens,
eine Rotation des Hebels (13), um ein Anheben und Absehken der geformten Hebel (5) zu verursachen, die um den Querstift (18) und um die Platte (8) schwenken, und
ein vorwärts und umgekehrt gerichtetes Gleiten des Stiftes (60) in dem horizontalen Teil und in dem geneigten Abschnitt (33) des Schlitzes (32), so daß dessen Verzahnung (61) in den entsprechenden Schlitz (63) eingreift oder aus ihm zurückgezogen wird.

2. Betätigungsvorrichtung nach Anspruch 1, bei welcher die Einrichtung für das horizontale Gleiten des Gleitblockes (24) Verzahnungen (37) umfaßt, welche in die Seitenschlitze (38) der Arme (22) eingreifen und in ein flexibles Seil (39) eingezwängt sind, das längs Durchgängen (40) der Profilstäbe gleitet, wobei der Zug auf die Seile von Betätigern ausgeübt wird.

3. Betätigungsvorrichtung nach Anspruch 1 oder 2, bei welcher die Querstifte (18) der vorderen Enden (17) der geformten Hebel (5) mit den vorderen horizontalen Zonen der Schlitze (32), wenn das Sonnendach (1) geschlossen ist, und mit den geneigten Zonen (33) bei abschließendem Positionieren in den vorderen Zonen (31) bei geöffnetem Sonnendach in Eingriff treten.

4. Betätigungsvorrichtung nach einem der vorhergehenden Ansprüche, bei welcher die vorderen Enden (17) der geformten Hebel zum Stützen und Halten des Sonnendaches (1) in der Schließlage im wesentlichen mit dem vorderen Rand (2) ausgerichtet sind, welcher die Öffnung des Rahmens (41) des Sonnendaches (1) begrenzt.

5. Betätigungsvorrichtung nach einem der vorhergehenden Ansprüche, bei welcher die geformten Hebel (5) Kupplungen (4) aufweisen, welche Kupplungsverzahnungen (3') ergreifen, die an starren Stützen (3) vorgesehen sind, welche das Dachelement (1) abstützen.

6. Betätigungsvorrichtung nach Anspruch 5, bei welcher die Kupplung (4) mit einem Verriegelungshebel (6) ausgebildet ist, der von einem elastischen Bauteil (7) in seiner Lage gehalten wird.

7. Betätigungsvorrichtung nach einem der vorhergehenden Ansprüche, bei welcher Anschläge (64) zum Anhalten der Bewegung der vorderen Führungen (11) vorgesehen sind.

## Revendications

1. Dispositif d'actionnement du toit ouvrant (1) d'un véhicule à moteur ou analogue, comprenant :
- un profilé en acier (20) muni de guides latéraux (19) ;
- un chariot (24) qui coulisse dans lesdits guides latéraux (19) du profilé (20) et est muni de deux parois latérales comportant des lentes parallèles et opposées (25), ainsi que des moyens rotatifs (14) engrenés dans une crémaillère (27);
- des leviers profilés (5) qui coulissent dans lesdits guides latéraux (19) et supportent le toit ouvrant (1), chaque levier étant muni d'une fente (9) ;
- des moyens (37, 38, 39) permettant un coulissement horizontal du chariot (24) ;
- des moyens pour convertir le coulissement horizontal du chariot (24) en un mouvement de translation des leviers profilés (5) ;
- des moyens pour convertir le coulissement horizontal du chariot (24) en des mouvements de montée et de descente des leviers profilés coulissants (5) au cours des phases d'ouverture et de fermeture respectivement du toit ouvrant (1), lesdits moyens comprenant :
- un levier (13) comportant à une extrémité des moyens qui coopèrent avec les moyens rotatifs (14) du chariot (24), engrenés dans une crémaillère 27 et à l'autre extrémité, des axes (12) qui glissent dans les lentes (9) des leviers profilés coulissants (5), ainsi que des axes d'articulation (26) qui coulissent dans les lentes (25) du chariot (24),
- un guide antérieur (11) qui coulisse dans les guides latéraux (19) du profilé (20) et qui est couplé au chariot (24) par des leviers (28) respectivement munis d'une fente (30) dans laquelle glisse chaque axe d'articulation (26), et
- des moyens de verrouillage du guide antérieur (11) au cours du mouvement de translation des leviers profilés (5),
ledit dispositif d'actionnement étant **caractérisé en ce que** :
- le chariot (24) est muni de deux bras parallèles et opposés (22) qui coulissent dans les guides latéraux (19) du profilé (20), chaque bras (22) comportant une fente longitudinale (32) à section (33) inclinée vers le haut et une partie antérieure (31) ;
- chaque levier profilé (5) présente une partie antérieure inclinée vers le bas, une extrémité antérieure (17) infléchie vers l'avant et un axe transversal (18) prévu à l'extrémité antérieure (17), chaque axe transversal (18) s'engageant dans la section inclinée (33) et dans la partie antérieure (31) de chaque fente longitudinale (32) ;
- le guide antérieur (11) comporte des coulisses latérales (15) coulissant chacune dans la partie horizontale de la fente longitudinale (32) de chaque bras (22), et une rainure verticale (62), ledit guide antérieur (11) étant couplé de manière pivotante par une plaque (8) à la partie antérieure inclinée vers le bas de chaque levier profilé (5) ;
- les moyens de verrouillage du guide antérieur (11) comprennent un axe (60) solidaire d'une dentelure d'arrêt (61) qui coulisse dans la rainure verticale (62) du guide antérieur (11) et peut s'engager dans une fente (63) du profilé (20) lorsque le toit ouvrant est fermé, le mouvement horizontal du chariot (24) provoquant :
- le coulissement vers l'avant et l'arrière de l'axe transversal (18) dans la partie inclinée (33) de la fente (32) permettant en position fermée d'obtenir une adhérence étanche du toit ouvrant (1) sur un joint périphérique (56), et l'écartement du joint périphérique (56), du toit ouvrant (1) au cours de la phase d'ouverture ;
- une rotation du levier (13) pour provoquer la montée et la descente des leviers profilés (5) qui pivotent autour de l'axe transversal (18) et de la plaque (8) ; et
- un coulissement vers l'avant et l'arrière de l'axe (60) dans la partie horizontale et dans la partie inclinée (33) de la fente (32) de manière à ce que sa dentelure (61) soit engagée dans ou dégagée de sa fente respective (63).

2. Dispositif d'actionnement seion la revendication 1, dans lequel les moyens pour le coulissement horizontal du chariot (24) comprennent des dentelures (37) engagées dans des fentes latérales (38) des bras (22) et assujetis à un câble flexible (39) qui glisse le long de passages (40) des profilés (20), la traction sur ces câbles étant assurée par des actionneurs.

3. Dispositif d'actionnement selon la revendication 1 ou 2, dans lequel les axes transversaux (18) des extrémités antérieures (17) desdits leviers profilés (5) coopèrent avec les zones horizontales antérieures des fentes (32) lorsque le toit ouvrant (1) est fermé et avec les zones inclinées (33) pour un positionnement terminal dans les zones antérieures (31) lorsque le toit ouvrant est ouvert.

4. Dispositif d'actionnement selon l'une quelconque des revendications précédentes, dans lequel les extrémités antérieures (17) des leviers profilés (5) de support et d'assujetissement du toit ouvrant (1) à l'état fermé sont sensiblement alignés avec le bord antérieur (2) qui délimite l'ouverture du châssis (41) du toit ouvrant (1).

5. Dispositif d'actionnement selon l'une quelconque des revendications précédentes, dans lequel les leviers profilés (5) comprennent des accouplements (4) qui coopèrent avec des dentelures d'accouplement (3') prévus sur des supports rigides (3) qui soutiennent l'élément de couverture (1).

6. Dispositif d'actionnement selon la revendication 5, dans lequel les accouplements (4) comportent un levier de verrouillage (6) maintenu en position par un élément souple (7).

7. Dispositif d'actionnement selon l'une quelconque des revendications précédentes, dans lequel des butées (64) sont prévues pour arrêter la course des guides antérieurs (11).
